# DEMANDE DE BREVET EUROPEEN

(11) **EP 3 757 422 A1**
(43) Date de publication de la demande: **30.12.2020**
(21) Numéro de dépôt: 20181507.3
(22) Date de dépôt: 22.06.2020
(51) Int. Cl.: F16F 15/315, F16F 15/131, F16D 1/033, F16D 13/70

(54) **VOLANT FLEXIBLE**

(30) Priorité: 28.06.2019 FR 1907124
(71) Demandeur: VALEO EMBRAYAGES, 80009 Amiens (FR)
(72) Inventeur: CIMA, Massimo, 95892 CERGY PONTOISE (FR); CALANDRI, Fabrizio, 95892 CERGY PONTOISE (FR); SAVASTANO, Nicola, 95892 CERGY PONTOISE (FR)
(74) Mandataire: Vincent, Catherine Marie Marguerite

(57) **Abrégé**

L'invention concerne un volant (5,50) flexible pour embrayage, en particulier pour véhicule, du type comprenant une masse annulaire (6,60), et une plaque annulaire (7,70) rendue solidaire en rotation de la masse annulaire d'une part et d'un arbre menant d'autre part, la masse annulaire et la plaque annulaire étant reliées l'une à l'autre par des premiers moyens de fixation (19), la plaque annulaire comprenant une première feuille (9,90) et une deuxième feuille (10,100) entre lesquelles est insérée la masse annulaire, les premiers moyens de fixation traversant la première feuille, la masse annulaire et la deuxième feuille.

## Description

L'invention concerne un volant flexible pour embrayage, adapté en particulier pour un véhicule automobile.

L'invention concerne plus particulièrement un volant flexible, du type comprenant une masse annulaire et une plaque annulaire rendue solidaire en rotation de la masse annulaire, d'une part, et d'un arbre menant, d'autre part.

Un tel volant flexible pour embrayage est par exemple connu de la demande de brevet française FR2827653.

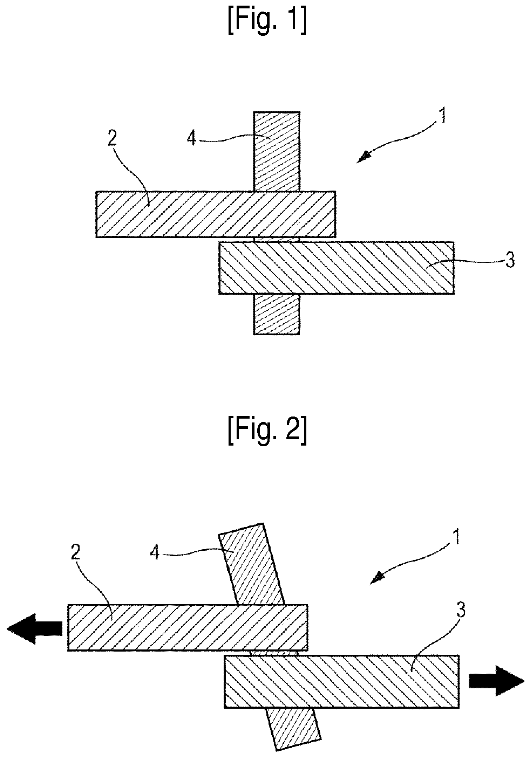

Un tel volant flexible est également schématiquement illustré à la [Fig.1] de la présente demande. Cette [Fig.1] décrit plus particulièrement un volant flexible (1) dans lequel une masse annulaire (2) formant un volant d'inertie est montée par l'intermédiaire d'une plaque annulaire (3) flexible, ici une tôle flexible, en bout d'un arbre menant (non représenté) tel que le vilebrequin d'un moteur à combustion interne. Une vis (4) est montée de telle sorte à relier la masse annulaire (2) et la plaque annulaire (3) flexible l'une avec l'autre.

En [Fig.2] est illustré le même volant flexible (1) qu'en [Fig.l], une fois des forces contraires appliquées sur la masse annulaire (2) d'une part et sur la plaque annulaire (3) d'autre part. Les forces appliquées sont représentées par deux flèches qui s'opposent. On constate que la masse annulaire (2) et la plaque annulaire (3) s'écartent l'une de l'autre, exerçant sur la vis (4) un effort, entrainant un basculement de la vis (4). Il s'en suit un éloignement anormal de la masse annulaire (2) par rapport à la plaque annulaire (3). Un tel éloignement risque d'entrainer une rupture de la vis (4) ne permettant plus d'assurer la liaison correcte de la plaque annulaire (3) avec la mase annulaire (2).

La présente invention a notamment pour but d'apporter une solution à ce problème.

Dans ce but, l'invention propose un volant flexible du type décrit ci-dessus, dans lequel la plaque annulaire forme une structure feuilletée comprenant au moins une première feuille et une deuxième feuille entre lesquelles est insérée la masse annulaire. En particulier l'invention vise à proposer un volant flexible avec une connexion en double cisaillement, réalisé en insérant la masse primaire entre deux feuilles ou deux plaques flexibles à leur périphérie extérieure. De cette manière, la connexion externe sera un type efficace à double cisaillement, avec des forces agissant sur deux sections transversales distinctes d'un même rivet, tout en préservant la symétrie de la connexion.

Plus précisément l'invention a pour objet un volant flexible pour embrayage, en particulier pour véhicule, du type comprenant
une masse annulaire, et
une plaque annulaire rendue solidaire en rotation de la masse annulaire d'une part et d'un arbre menant d'autre part,
la masse annulaire et la plaque annulaire étant reliées l'une à l'autre par des premiers moyens de fixation, la plaque annulaire comprenant une première feuille et une deuxième feuille entre lesquelles est insérée la masse annulaire, les premiers moyens de fixation traversant la première feuille, la masse annulaire et la deuxième feuille.

Ainsi, l'effort exercé sur les premiers moyens de fixation est réparti de part et d'autre de la masse annulaire, le long de la portion de chacune des feuilles au contact avec les premiers moyens de fixation. Ainsi les premiers moyens de fixation sont moins sollicités et risquent moins d'être détériorés.

Ainsi également, la capacité de charge assurée par une liaison à double cisaillement est deux fois plus grande que celle permise par une liaison à simple cisaillement, en raison d'efforts agissant sur deux sections distinctes du même rivet (au lieu d'un seul), et grâce à la symétrie de la connexion (n'introduisant pas de moment de flexion secondaire).

Selon d'autres caractéristiques de l'invention :
- la plaque annulaire est de structure feuilletée, comprenant au moins deux feuilles ;
- la première feuille et la deuxième feuille sont agencées l'une par rapport à l'autre de telle manière à ce que l'écartement mesuré entre la première feuille et la deuxième feuille est constant tout le long de ces deux feuilles ;
- une entretoise est interposée entre la première feuille et la deuxième feuille ;
- une épaisseur de l'entretoise est identique à une épaisseur d'une portion de la masse annulaire interposée entre la première feuille et la deuxième feuille ;
- la première feuille et la deuxième feuille sont agencées l'une par rapport à l'autre de telle manière à ce que l'écartement mesuré entre la première feuille et la deuxième feuille varie le long de la première feuille et de la deuxième feuille ;
- la première feuille et la deuxième feuille présentent chacune une périphérie radialement externe proche de la masse annulaire et une périphérie radialement interne éloignée de la masse annulaire, la première feuille et la deuxième feuille étant accolées l'une à l'autre à leur périphérie radialement interne respective ;
- la masse annulaire présente un premier anneau circulaire et un deuxième anneau circulaire, le deuxième anneau circulaire étant d'épaisseur plus petite que celle du premier anneau, la première feuille et la deuxième feuille étant reliées l'une à l'autre au travers du deuxième anneau circulaire ;
- la plaque annulaire est liée en rotation à un moyeu primaire, le moyeu primaire étant apte à être relié à un arbre menant, et
- le moyeu primaire présente une portion cylindrique et une collerette s'étendant radialement par rapport à un axe le long duquel s'étend la portion cylindrique, la première feuille et la deuxième feuille étant reliées en rotation à la collerette par des deuxièmes moyens de fixation ;
- une plaque de maintien est placée sur la première feuille ou sur la deuxième feuille de sorte à ce que la première feuille et la deuxième feuille sont enserrées entre la collerette et la plaque de maintien.

L'invention sera mieux comprise, et d'autres buts, détails, caractéristiques et avantages de celle-ci apparaîtront plus clairement au cours de la description suivante de plusieurs modes de réalisation de l'invention, donné uniquement à titre illustratif et non limitatif, en référence aux figures annexées.
[Fig.1] illustre une représentation schématique d'un volant flexible selon une première position, selon l'art antérieur ;
[Fig.2] illustre une représentation schématique d'un volant flexible selon une deuxième position, selon l'art antérieur ;
[Fig.3] représente un volant flexible selon un premier mode de réalisation de l'invention ;
[Fig.4] représente une vue agrandie du volant flexible selon la figure 3, et
[Fig.5] représente un volant flexible selon un deuxième mode de réalisation de l'invention.

Les [Fig.1] et [Fig.2] sont des représentations schématiques d'un volant flexible selon l'art antérieur, décrites en préambule de la présente description dans laquelle la masse annulaire est montée par l'intermédiaire d'une tôle flexible sur un arbre menant (non représenté).

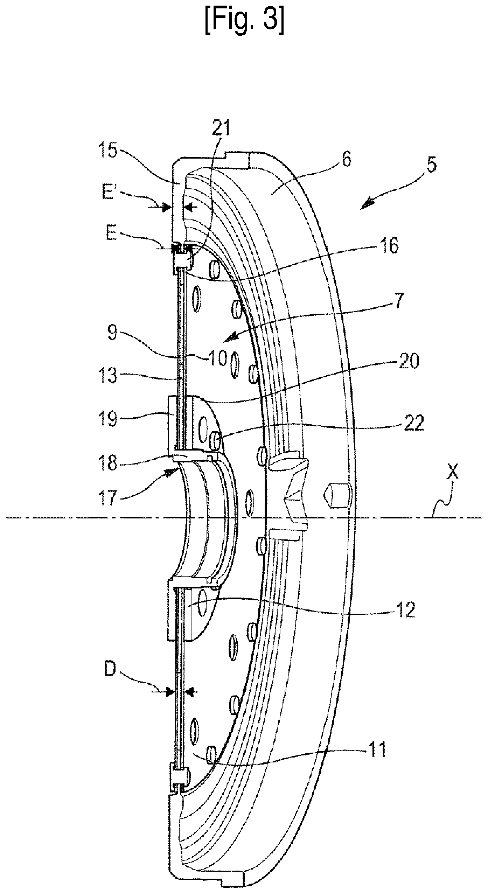

La [Fig.3] illustre un volant 5 flexible apte à être associé directement ou indirectement par l'intermédiaire d'un embrayage à un arbre menant (non représenté). Le volant 5 flexible comprend une masse annulaire 6 et une plaque annulaire 7. La plaque annulaire 7 est solidaire en rotation de la masse annulaire 6, d'une part, et de l'arbre menant, d'autre part. L'arbre menant est coaxial à un axe X de rotation du volant 5 flexible.

La masse annulaire 6 et la plaque annulaire 7 sont reliées l'une à l'autre par des premiers moyens de fixation, tels que des rivets 21.

La plaque annulaire 7 présente une structure feuilletée et comprend dans cet exemple une première feuille 9 et une deuxième feuille 10. La première feuille 9 et la deuxième feuille peuvent être issues de la découpe d'un feuillard par exemple en tôle, prétraité. Selon l'invention, entre la première feuille 9 et la deuxième feuille 10 est insérée la masse annulaire 6 et les premiers moyens de fixation tels les rivets 21 relient la première feuille 9 et la deuxième feuille 10 l'une à l'autre tout en traversant la masse annulaire 6. La masse annulaire 6 est alors reliée à la première feuille 9 et à la deuxième feuille 10.

Chacune des feuilles 9,10 présente une périphérie radialement externe 11 destinée à être proche de la masse annulaire 6 et une périphérie radialement interne 12 destinée à être éloignée de cette même masse annulaire 6. Les deux feuilles 9,10 sont reliées par leur périphérie radialement externe 11 à la masse annulaire 6.

La première feuille 9 et la deuxième feuille 10 s'étendent chacune dans un plan parallèlement l'une par rapport à l'autre. La première feuille 9 et la deuxième feuille 10 sont espacées l'une de l'autre d'une distance D qui est constante depuis leur périphérie radialement externe vers leur périphérie radialement interne respective. La distance D est mesurée entre la première feuille 9 et la deuxième feuille 10, le long d'un axe coupant la première feuille 9 et la deuxième feuille 10 et qui est parallèle à l'axe X.

Afin de garder une distance D constante tout le long des deux feuilles 9 et 10, une entretoise 13 est interposée entre la première feuille 9 et la deuxième feuille 10, au niveau de leur périphérie radialement interne 12. Dans cet exemple, l'entretoise 13 est formée par un disque annulaire.

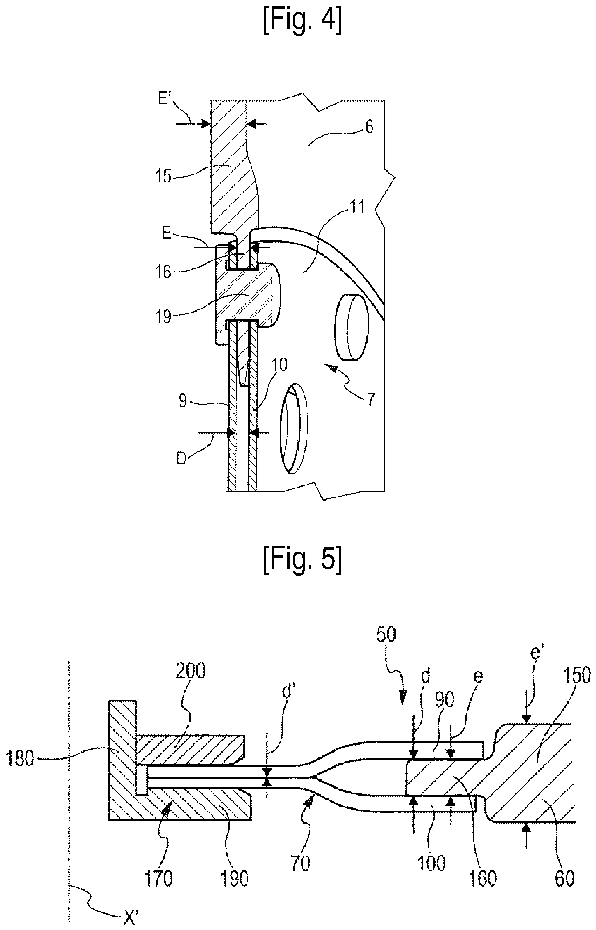

[Fig.4] est représenté un agrandissement d'une zone de la figure 3. En particulier, on peut observer que la masse annulaire 6 présente un premier anneau circulaire 15 et un deuxième anneau circulaire 16. Le deuxième anneau circulaire 16 est d'épaisseur E plus petite qu'une épaisseur E' du premier anneau circulaire 15. La première feuille 9 et la deuxième feuille 10 sont reliées l'une à l'autre au travers du deuxième anneau circulaire 16.

La plaque annulaire 7 est liée en rotation à un moyeu primaire 17. Le moyeu primaire 17 est apte à être relié à l'arbre menant et est d'axe coaxial à l'axe X de rotation. Le moyeu primaire 17 présente une portion cylindrique 18 et une collerette 19 qui s'étend radialement par rapport à un axe le long duquel s'étend la portion cylindrique 18 et qui est coaxial à l'axe X. La première feuille 9 et la deuxième feuille 10 sont enserrées entre la collerette 19 et une plaque de maintien 20 qui est placée sur la deuxième feuilles 10. La première feuille 9 et la deuxième feuille 10 sont reliées en rotation à la collerette 19 et à la plaque de maintien 20 par des deuxièmes moyens de fixation 22, tels que des rivets qui traversent la plaque de maintien 20, la deuxième feuille 10, la première feuille 9 et la collerette 19.

[Fig.5] est illustré un deuxième mode de réalisation de l'invention. Dans ce deuxième mode de réalisation, le volant flexible 50 présente une masse annulaire 60 et une plaque annulaire 70. La plaque annulaire 70 présente une structure feuilletée avec une première feuille 90 et une deuxième feuille 100 qui sont reliées à la masse annulaire 60 et à un moyeu primaire 170. La première feuille 90 et la deuxième feuille 100 sont placées de part et d'autre de la masse annulaire 60. La masse annulaire 60 présente un premier anneau circulaire 150 et un deuxième anneau circulaire 160 d'épaisseur e plus petite qu'une épaisseur e' du premier anneau circulaire 150. Ce deuxième mode de réalisation de l'invention diffère essentiellement du premier mode de réalisation en ce que la distance mesurée entre la première feuille 90 et la deuxième feuille 100 varie depuis leur périphérie externe vers leur périphérie interne. En particulier, dans ce mode de réalisation, la distance d mesurée à un endroit proche de la masse annulaire 60 est plus grande qu'une distance d' mesurée à un endroit éloignée de la masse primaire 60. Les distances d et d' sont mesurées chacune le long d'un axe qui est parallèle à un axe X' de rotation de ce volant flexible 50. Bien que non représentés, des premiers moyens de fixation et des deuxièmes moyens de fixation sont prévus pour relier respectivement la première feuille 90 et la deuxième feuille 100 à la masse annulaire 60, d'une part, et la première feuille 90 et la deuxième feuille 100 au moyeu primaire 170, d'autre part.

La première feuille 90 et la deuxième feuille 100 sont accolées l'une à l'autre à l'endroit de leur fixation au moyeu primaire 170 avec une distance d' qui est nulle alors qu'elles sont écartées à l'endroit où elles sont reliées à la masse annulaire 60 d'un distance d qui est égale à l'épaisseur e de l'anneau circulaire 160.

Le moyeu primaire 170 comprend une portion annulaire cylindrique 180 et une collerette 180 s'étendant radialement vers l'extérieur par rapport à l'axe de rotation X'. La première feuille 90 et la deuxième feuille 100 sont enserrées entre la collerette 190 et une plaque de maintien 200 tout en étant reliées en rotation au moyeu primaire 170 par des deuxièmes moyens de fixation (non représentés).

## Revendications

1. Volant (5,50) flexible pour embrayage, en particulier pour véhicule, du type comprenant
une masse annulaire (6,60), et
une plaque annulaire (7,70) rendue solidaire en rotation de la masse annulaire d'une part et d'un arbre menant d'autre part,
la masse annulaire et la plaque annulaire étant reliées l'une à l'autre par des premiers moyens de fixation (19), la plaque annulaire comprenant une première feuille (9,90) et une deuxième feuille (10,100) entre lesquelles est insérée la masse annulaire, les premiers moyens de fixation traversant la première feuille, la masse annulaire et la deuxième feuille.

2. Volant selon la revendication 1, dans lequel la première feuille et la deuxième feuille sont agencées l'une par rapport à l'autre de telle manière à ce que l'écartement mesuré entre la première feuille et la deuxième feuille est constant tout le long de ces deux feuilles.

3. Volant selon l'une des revendications 1 à 2, dans lequel une entretoise (13) est interposée entre la première feuille et la deuxième feuille.

4. Volant selon la revendication 3, dans lequel une épaisseur de l'entretoise est identique à une épaisseur d'une portion de la masse annulaire interposée entre la première feuille et la deuxième feuille.

5. Volant selon la revendication 1, dans lequel la première feuille et la deuxième feuille sont agencées l'une par rapport à l'autre de telle manière à ce que l'écartement mesuré entre la première feuille et la deuxième feuille varie le long de la première feuille et de la deuxième feuille.

6. Volant selon la revendication 5, dans lequel la première feuille et la deuxième feuille présentent chacune une périphérie radialement externe proche de la masse annulaire et une périphérie radialement interne éloignée de la masse annulaire, la première feuille et la deuxième feuille étant accolées l'une à l'autre à leur périphérie radialement interne respective.

7. Volant selon l'une des revendications 1 à 6, dans lequel la masse annulaire présente un premier anneau circulaire (15,150) et un deuxième anneau circulaire (16,160), le deuxième anneau circulaire étant d'épaisseur plus petite que celle du premier anneau, la première feuille et la deuxième feuille étant reliées l'une à l'autre au travers du deuxième anneau circulaire.

8. Volant selon l'une des revendications 1 à 7, dans lequel
- la plaque annulaire est liée en rotation à un moyeu primaire (17,170), le moyeu primaire étant apte à être relié à un arbre menant
- le moyeu primaire présente une portion cylindrique (18,180) et une collerette (19,190) s'étendant radialement par rapport à un axe le long duquel s'étend la portion cylindrique, la première feuille et la deuxième feuille étant reliées en rotation à la collerette par des deuxièmes moyens de fixation.

9. Volant selon la revendication 8, dans lequel une plaque de maintien (20) est placée sur la première feuille ou sur la deuxième feuille de sorte à ce que la première feuille et la deuxième feuille sont enserrées entre la collerette et la plaque de maintien.
